# EUROPEAN PATENT SPECIFICATION

(11) **EP 4 312 634 B1**
(45) Date of publication and mention of the grant of the patent: **26.08.2026**
(21) Application number: 22849883.8
(22) Date of filing: 27.07.2022
(51) Int. Cl.: A24F 40/57, A24F 40/51, H02M 1/00, A24F 40/46, A24F 40/53, G05B 11/42, H02J 7/00

(54) **AEROSOL GENERATING DEVICE CAPABLE OF CONTROLLING PREHEATING OPERATION FOR AEROSOL GENERATING ARTICLE AND OPERATING METHOD THEREOF**
AEROSOLERZEUGUNGSVORRICHTUNG ZUR STEUERUNG DES VORHEIZVORGANGS FÜR AEROSOLERZEUGUNGSARTIKEL UND BETRIEBSVERFAHREN DAFÜR
DISPOSITIF GÉNÉRANT UN AÉROSOL CAPABLE DE COMMANDER UNE OPÉRATION DE PRÉCHAUFFAGE POUR UN ARTICLE GÉNÉRANT UN AÉROSOL ET SON PROCÉDÉ DE FONCTIONNEMENT

(30) Priority: 28.07.2021 KR 20210099435
(43) Date of publication of application: 07.02.2024
(73) Proprietor: KT&G Corporation, Daedeok-gu Daejeon 34337 (KR)
(72) Inventor: KIM, Yong Hwan, Anyang-si, Gyeonggi-do 13970 (KR); KIM, Dong Sung, Seoul 06310 (KR); LIM, Hun Il, Seoul 05555 (KR); JANG, Seok Su, Daejeon 34337 (KR)
(74) Representative: Ter Meer Steinmeister & Partner
(86) International application number: PCT/KR2022/011048
(87) International publication number: WO 2023/008907

(56) References cited:
- EP-A1- 3 818 874
- WO-A1-2019/115464
- WO-A1-2020/008008
- WO-A1-2020/182731
- WO-A1-2020/193176
- WO-A1-2021/060716
- WO-A1-2021/060716
- CN-A- 112 841 752
- US-A1- 2022 378 110

## Description

### Technical Field

The present disclosure relates to an aerosol generating device capable of controlling a preheating temperature profile for an aerosol generating article and an operating method of the aerosol generating device.

### Background Art

There has been an increasing demand for a replacement method of overcoming the disadvantages of general cigarettes. For example, there is an increasing demand for a system of generating aerosols by heating cigarettes or an aerosol generating material by using an aerosol generating device, instead of a method of generating aerosols by burning cigarettes.

A target temperature for heating an aerosol generating article may be set in the aerosol generating device. Also, the temperature of a heater may be increased to the target temperature by preheating the heater for a certain amount of time before heating the aerosol generating article.

CN 112 841 752 A relates to the field of smoking devices, and provides an aerosol generation device and a control method thereof. The method comprises: controlling a heater to rise from an initial temperature to a first pre-determined temperature; if the heater has risen from the initial temperature to the first pre-determined temperature, controlling the heater to maintain the first pre-determined temperature for a first pre-determined duration; and controlling a sum of the duration of the heater to rise from the initial temperature to the first pre-determined temperature and the first pre-determined duration to be greater than or equal to a second pre-determined duration.
WO 2021/060716 A1 relates to an aerosol generating device including: a heater configured to heat an aerosol-generating material; a battery configured to supply power to the heater; a puff detection sensor configured to detect a user's puff; and a controller configured to receive a sensing value from the puff detection sensor, wherein the controller is configured to, when the sensing value is equal to or less than a first threshold value, determine that a puff has occurred and control power supplied to the heater based on a first temperature profile for a pre-set time period, and after the pre-set time period, control power supplied to the heater based on a second temperature profile.
EP 3 818 874 A1 relates to an aerosol generating apparatus including: a heater generating an aerosol by heating an aerosol generating substrate; and a controller monitoring and controlling power supplied to the heater, wherein, upon receiving an input of reheating the heater within a preset time, after the heater reaches the first target temperature and generates an aerosol, the controller controls the heater to generate an aerosol according to a second target temperature lower than the first target temperature.

### Disclosure of Invention

### Technical Problem

When a user ends smoking after a preset number of puffs for an aerosol generating article, a heater of an aerosol generating device may be heated at a high temperature. Thereafter, when the user inserts a new aerosol generating article into the aerosol generating device so as to smoke continuously, the heater of the aerosol generating device may be preheated again in a high temperature state. When the heater of the aerosol generating device is preheated for initial smoking and continuous smoking according to the same temperature profile, high-temperature aerosols may be generated from the aerosol generating article during continuous smoking so that the user's inconvenience may occur.

The present disclosure according to various embodiments provides an aerosol generating device in which initial smoking and continuous smoking may be distinguished from each other and the temperature of a heater may be controlled according to a preheating temperature profile.

The problems to be solved through embodiments of the present disclosure are not limited to the above-mentioned problems, and problems that are not mentioned will be clearly understood by one of ordinary skilled in the art from the specifications and the accompanying drawings.

### Solution to Problem

At least one of the problems is solved by the features of the independent claims. Preferred embodiments are defined in the dependent claims and in the description.

### Advantageous Effects of Invention

According to various embodiments of the present disclosure, as preheating is performed based on a preheating temperature profile corresponding to initial smoking and continuous smoking, the heat of aerosols generated from an aerosol generating articles even during continuous smoking may be reduced, and user's inconvenience caused by high-temperature aerosols may be prevented.

In addition, according to various embodiments of the present disclosure, as, in the preheating temperature profile corresponding to continuous smoking, a time corresponding to a temperature drop section increases, the current consumption of the heater when the user continuously smokes may be reduced.

However, the effects caused by embodiments are not limited to the above-mentioned effects, and effects that are not mentioned will be clearly understood by one of ordinary skilled in the art from the specifications and the accompanying drawings.

### Brief Description of Drawings

FIG. 1 is a block diagram of an aerosol generating device according to an embodiment;
FIG. 2 is a flowchart illustrating control of power supply to a heater based on a temperature profile in an aerosol generating device according to an embodiment;
FIG. 3A is a graph for explaining a first temperature profile for a first smoking operation;
FIG. 3B is a graph for explaining a second temperature profile for a second smoking operation;
FIG. 4 is a graph for explaining a second temperature profile corresponding to a temperature of a heater according to an embodiment;
FIG. 5 is a flowchart illustrating control of power supply to a heater based on a temperature rising speed in an aerosol generating device according to an embodiment;
FIG. 6 is a graph for explaining a second temperature profile corresponding to a temperature rising speed according to an embodiment;
FIG. 7 is a graph for describing a method whereby an aerosol generating device according to an embodiment detects a second smoking operation; and
FIG. 8 is a block diagram of an aerosol generating device according to another embodiment.

### Best Mode for Carrying out the invention

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the susceptor may be a magnetic body that generates heat by an external magnetic field. As the susceptor is positioned inside the coil and a magnetic field is applied to the susceptor, the susceptor generates heat to heat an aerosol generating article. In addition, optionally, the susceptor may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

Hereinafter, embodiments of the present disclosure will be described in detail with reference to the drawings.

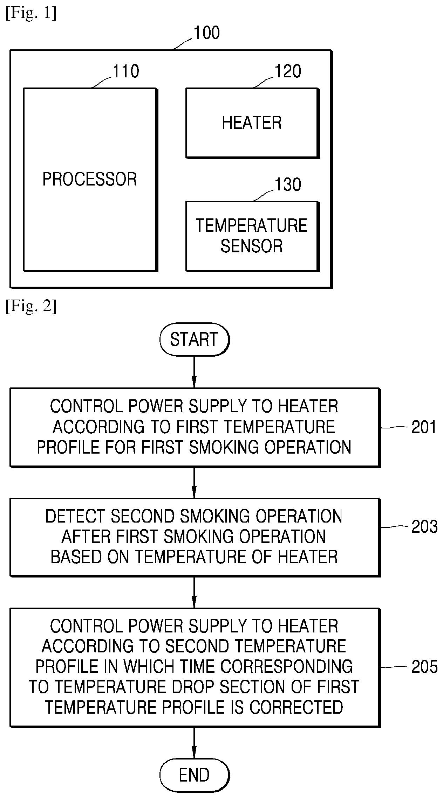

FIG. 1 is a block diagram of an aerosol generating device according to an embodiment.

Referring to FIG. 1, an aerosol generating device 100 may include a processor 110, a heater 120, and a temperature sensor 130. Elements of the aerosol generating device 100 according to an embodiment are not limited thereto. Other elements may be added, or at least one element may be omitted according to an embodiment.

In an embodiment, the heater 120 may heat at least a portion of an aerosol generating article. For example, the heater 120 may heat at least a portion of the aerosol generating article as power is supplied to the heater 120 via the processor 110. At least a portion of the aerosol generating article may mean a tobacco rod including at least one of an aerosol generating material and a tobacco material. In an embodiment, the heater 120 may receive power from the processor 110 according to a temperature profile corresponding to a preheating section and a heating section. For example, the heater 120 may receive power from the processor 110 according to a preheating temperature profile corresponding to the preheating section, and the preheating temperature profile may include a temperature rising section, a temperature maintenance section, and a temperature drop section. A detailed description of the preheating temperature profile will be provided below.

In an embodiment, the temperature sensor 130 may measure the temperature of the heater 120. For example, the temperature sensor 130 may be a contact temperature sensor for measuring temperature while being in contact with the heater 120, or a non-contact temperature sensor for measuring temperature while being in non-contact with the heater 120. The contact temperature sensor may be a thermocouple, a resistance temperature detector (RTD), a thermistor or a temperature label, and the non-contact temperature sensor may be an infrared ray temperature sensor.

In an embodiment, the processor 110 may control the overall operation of the aerosol generating device 100. In an embodiment, the processor 110 may detect the user's smoking operation. In this case, in the present disclosure, the 'user's smoking operation' may mean that the user performs a series of puffs as much as a preset number of puffs (e.g., 14 times) on one aerosol generating article. For example, the processor 110 may detect the user's continuous smoking operation based on temperature of the heater 120 measured by the temperature sensor 130. In another example, the processor 110 may also detect the user's continuous smoking operation based on time measured by a timer (not shown).

In an embodiment, the processor 110 may control power supply to the heater 120 according to the user's smoking operation. For example, the processor 110 may detect whether the user's smoking operation is an initial smoking operation or a continuous smoking operation following the first smoking operation, and may control power supply to the heater 120 based on a detection result. A detailed description thereof will be provided below.

FIG. 2 is a flowchart illustrating that an aerosol generating device according to an embodiment controls power supply to a heater based on a temperature profile.

Referring to FIG. 2, a processor (e.g., the processor 110 of FIG. 1) of an aerosol generating device (e.g., the aerosol generating device 100 of FIG. 1) may control power supply to a heater (e.g., the heater 120 of FIG. 1) for a first smoking operation according to a first temperature profile. In the present disclosure, the 'first smoking operation' may mean that a series of puffs are performed as much as a preset number of puffs on a first aerosol generating article initially inserted after the power of the aerosol generating device 100 is converted into an on state.

In an embodiment, the first temperature profile may mean a preheating temperature profile for preheating the initially-inserted first aerosol generating article for a preset preheating time. For example, the first temperature profile may include a first temperature rising section S1H, a first temperature maintenance section S1M, and a first temperature drop section S1L so as to preheat the initially-inserted first aerosol generating article. When a preset preheating time is about 37 seconds, the first temperature profile may include the first temperature rising section S1H of about 19 seconds, the first temperature maintenance section S1M of about 11 seconds, and the first temperature drop section S1L of about 7 seconds.

In one embodiment, when the initiation of the first smoking operation is detected, the processor 110 may control power supply to the heater 120 as the heater 120 is preheated according to the first temperature profile. For example, the processor 110 may receive an additional user input (e.g., a physical button input, a voice input, a touch input or the like) or may detect the initiation of the first smoking operation as the processor 110 detects the insertion of the aerosol generating article.

According to an embodiment, the processor 110 may detect a second smoking operation after the first smoking operation based on the temperature of the heater 120 in operation 203. In the present disclosure, the 'second smoking operation' may mean that, as the first smoking operation is terminated, a second aerosol generating article is inserted immediately after the first aerosol generating article is removed and a series of puffs are performed on the second aerosol generating article as much as a preset number of puffs. In this case, the second aerosol generating article may mean an additional article (e.g., a cigarette) distinguished from the first aerosol generating article.

In an embodiment, the processor 110 may detect the initiation of an additional smoking operation after the termination of the first smoking operation is detected. For example, the processor 110 may receive an additional user input or may detect the termination of the first smoking operation as the removal of the aerosol generating article is detected. Also, the processor 110 may receive an additional user input after detecting the termination of the first smoking operation or may detect the initiation of an additional smoking operation as detecting the insertion of the aerosol generating article.

In an embodiment, the processor 110 may detect the second smoking operation based on the temperature of the heater 120 measured by a temperature sensor (e.g., the temperature sensor 130 of FIG. 1). For example, when the initiation of the additional smoking operation is detected after the termination of the first smoking operation is detected, the processor may detect the temperature of the heater 120 measured by the temperature sensor 130. When the detected temperature of the heater 120 is greater than or equal to a preset temperature, the processor 110 may detect the additional smoking operation to be a second smoking operation. In this case, the preset temperature may be about 80°C. However, embodiments are not limited thereto.

According to an embodiment, when the second smoking operation is detected, the processor 110 may control power supply to the heater 120 according to a second temperature profile in operation 205. In an embodiment, the second temperature profile may mean a preheating temperature profile for preheating the second aerosol generating article for a preset preheating time. For example, the second temperature profile may include a second temperature rising section S2H, a second temperature maintenance section S2M, and a second temperature drop section S2L so as to preheat the second aerosol generating article. When a preset preheating time is about 37 seconds, the second temperature profile may include the second temperature rising section S2H of about 17 seconds, the second temperature maintenance section S2M of about 9 seconds, and the second temperature drop section S2L of about 11 seconds.

In an embodiment, the second temperature profile may be a temperature profile in which a time corresponding to a temperature drop section of the first temperature profile is corrected. For example, a time corresponding to the second temperature drop section S2L of the second temperature profile may be longer than a time corresponding to the first temperature drop section S1L of the first temperature profile. At this time, a time corresponding to the second temperature rising section S2H and the second temperature maintenance section S2M of the second temperature profile may be shorter than a time corresponding to the first temperature rising section S1H and the first temperature maintenance section S1M of the first temperature profile. That is, when compared to the first temperature profile for a preset preheating time, in the second temperature profile, as a time corresponding to the temperature rising section and the temperature maintenance section is set to be short, a time corresponding to the temperature drop section may be set to be relatively long.

In the present disclosure, for the second smoking operation corresponding to the continuous smoking operation after the first smoking operation, preheating may be performed based on the second temperature profile in which a time corresponding to the temperature drop section is set to be substantially long, so that the temperature of the heater 120 may be substantially slowly decreased after reaching a target preheating temperature. As the temperature of the heater 120 is substantially slowly decreased after reaching the target preheating temperature, the heat of the aerosol generating article may be alleviated, and the inconvenience of the user caused by the high temperature aerosol generated by continuous smoking may be prevented. Also, as a time corresponding to the temperature drop section in the second smoking operation is substantially increased, when the user performs continuous smoking, the power consumption of the heater 120 may be reduced.

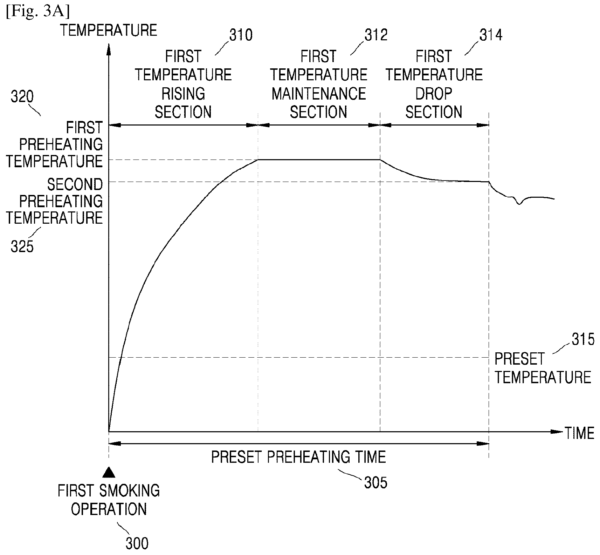

FIG. 3A is a graph for explaining a first temperature profile for a first smoking operation. In the description of FIG. 3A, the contents corresponding to, the same as or similar to the above-described contents may be omitted.

Referring to FIG. 3A, a processor (e.g., the processor 110 of FIG. 1) may detect the first smoking operation 300. For example, when the processor 110 receives an additional user input (e.g., a physical button input, a voice input, a touch input or the like) or detects the insertion of the aerosol generating article, the processor 110 may detect a first smoking operation 300 based on preset conditions (e.g., temperature conditions, time conditions).

In an embodiment, the processor 110 may detect the first smoking operation 300 based on the temperature measured by the temperature sensor (e.g., the temperature sensor 130 of FIG. 1). For example, when the initiation of a certain smoking operation is detected, the processor 110 may detect the temperature of the heater 120 measured by the temperature sensor 130. When the detected temperature of the heater 120 is less than a preset temperature 315, the processor 110 may detect the certain smoking operation to be the first smoking operation 300.

In another embodiment, the processor 110 may also detect the first smoking operation 300 based on time measured by a timer (not shown). For example, when the initiation of a certain smoking operation is detected, the processor 110 may detect an elapsed time by using the timer after the power of an aerosol generating device (e.g., the aerosol generating device 100) is converted into an on state. When the detected elapsed time is within a preset time (e.g., 1 minute), the processor 110 may detect the certain smoking operation to be the first smoking operation 300. When the detected elapsed time exceeds a preset time, the processor 110 may control a battery (not shown) so as to convert the power of the aerosol generating device 100 into an off state.

In an embodiment, after the first smoking operation 300 is detected, the processor 110 may perform a preheating operation on a first aerosol generating article based on a first temperature profile for a preset preheating time 305. The first aerosol generating article may mean an aerosol generating article initially inserted after the power of the aerosol generating device 100 is converted from an off state into an on state.

In an embodiment, the first temperature profile may include a first temperature rising section 310, a first temperature maintenance section 312, and a first temperature drop section 314.

For example, the first temperature rising section 310 may mean a section in which the temperature of the heater (e.g., the heater 120 of FIG. 1) rises to the first preheating temperature 320. After the first smoking operation 300 is detected, the processor 110 may supply power to the heater 120 so that the temperature of the heater 120 rises to the first preheating temperature 320 in the first temperature rising section 310. At this time, the first preheating temperature 320 may be about 275°C. However, embodiments are not limited thereto.

For example, the first temperature maintenance section 312 may mean a section in which the temperature of the heater 120 is maintained at the first preheating temperature 320. After the temperature of the heater 120 reaches the first preheating temperature 320, the processor 110 may supply power to the heater 120 so that the temperature of the heater 120 is maintained at the first preheating temperature 320 in the first temperature maintenance section 312.

For example, the first temperature drop section 314 may mean a section in which the temperature of the heater 120 drops from the first preheating temperature 320 to the second preheating temperature 325. After the temperature of the heater 120 is maintained at the first preheating temperature 320 for a preset maintenance time, the processor 110 may supply power to the heater 120 so that the temperature of the heater 120 drops to the second preheating temperature 325 in the first temperature drop section 314. At this time, the second preheating temperature 325 may be about 260°C. However, embodiments are not limited thereto.

In an embodiment, the processor 110 may control power supply to the heater 120 in a proportional-integral-differential (PID) control method. That is, the processor 110 may control power supply to the heater 120 in the PID control method so that the heater 120 may have a temperature corresponding to a set temperature profile. For example, after the first smoking operation 300 is detected, the processor 110 may supply power by adjusting a parameter Kp for P control, a parameter Ki for I control, and a parameter Kd for D control so that the temperature of the heater 120 reaches the first preheating temperature 320 according to a first temperature profile for a time corresponding to the first temperature rising section 310.

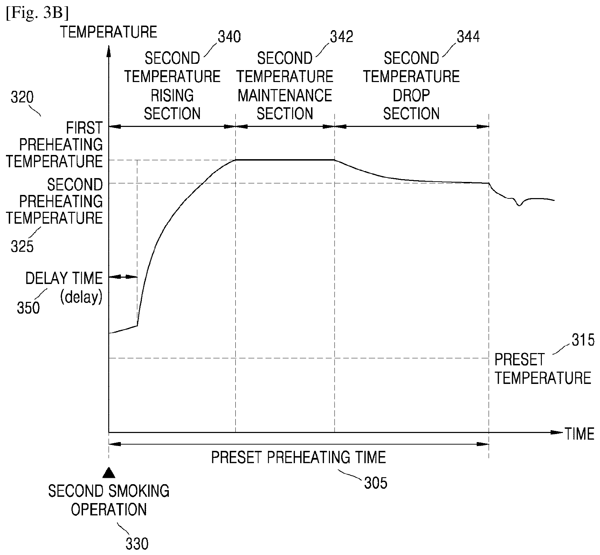

FIG. 3B is a graph for explaining a second temperature profile for a second smoking operation. In the description of FIG. 3B, the contents corresponding to, the same as or similar to the above-described contents may be omitted.

Referring to FIG. 3B, a processor (e.g., the processor 110 of FIG. 1) may detect a second smoking operation 330. For example, when the processor 110 receives an additional user input (e.g., a physical button input, a voice input, a touch input or the like) or detects the insertion of the aerosol generating article, the processor 110 may detect a second smoking operation 330 based on preset conditions (e.g., temperature conditions, time conditions).

In an embodiment, the processor 110 may detect the second smoking operation 330 based on the temperature measured by the temperature sensor (e.g., the temperature sensor 130 of FIG. 1). For example, when the initiation of a certain smoking operation is detected, the processor 110 may detect the temperature of the heater 120 measured by the temperature sensor 130. When the detected temperature of the heater 120 is greater than or equal to a preset temperature 315, the processor 110 may detect the certain smoking operation to be the second smoking operation 330.

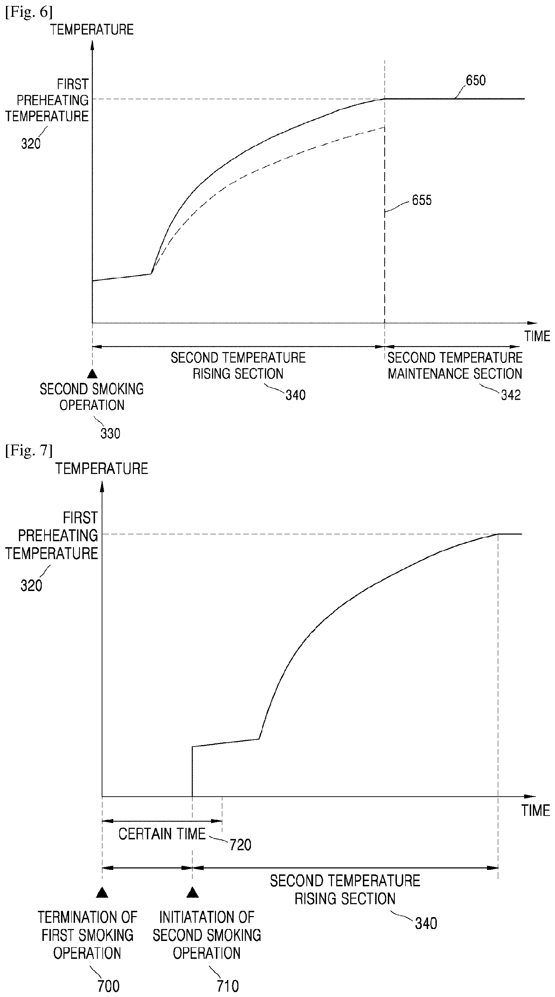

In another embodiment, the processor 110 may also detect the second smoking operation 330 based on time measured by a timer (not shown). However, a detailed description thereof will be provided later with reference to FIG. 7.

In an embodiment, after the second smoking operation 330 is detected, the processor 110 may perform a preheating operation on a second aerosol generating article based on a second temperature profile for the preset preheating time 305. The second aerosol generating article may mean an aerosol generating article newly inserted immediately after the first aerosol generating article is removed from the aerosol generating device 100. In an embodiment, in the first temperature profile of FIG. 3A and the second temperature profile of FIG. 3B, the preset preheating time 305 may be set to be the same.

In an embodiment, the second temperature profile may include a second temperature rising section 340, a second temperature maintenance section 342, and a second temperature drop section 344.

For example, the second temperature rising section 340 may mean a section in which the temperature of the heater (e.g., the heater 120 of FIG. 1) rises to the first preheating temperature 320. After the second smoking operation 330 is detected, the processor 110 may supply power to the heater 120 so that the temperature of the heater 120 rises to the first preheating temperature 320 in the second temperature rising section 340. At this time, the first preheating temperature 320 may be about 275°C. However, embodiments are not limited thereto. In an embodiment, the second temperature rising section 340 may include a certain delay time 350. For example, after the second smoking operation 330 is detected, the processor 110 may detect that a certain delay time 350 (e.g., 2 seconds) elapsed by using a timer (not shown), and may supply power to the heater 120.

In the present disclosure, as the second temperature rising section 340 of the second temperature profile includes a certain delay time 350, the parameter Kp for P control in the PID control method may be adjusted to be substantially high. As the parameter Kp for P control is adjusted to be substantially high, the processor 110 may provide a sufficient control amount so that the temperature of the heater 120 reaches a target temperature (e.g., the first preheating temperature 320).

In an embodiment, the certain delay time 350 may be set based on the temperature of the heater 120 at a time when the second smoking operation 330 is detected. That is, the higher the temperature of the heater 120 at the time when the second smoking operation 330 is detected, the longer the certain delay time 350, and the lower the temperature of the heater 120, the shorter the certain delay time 350. A detailed description thereof will be provided below.

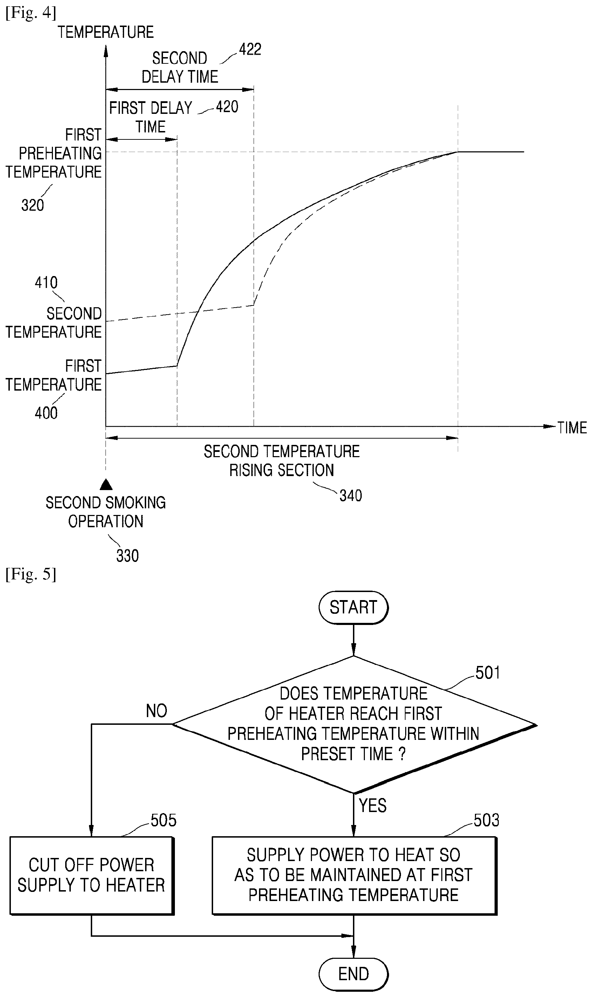

FIG. 4 is a graph for explaining a second temperature profile corresponding to a temperature of a heater according to an embodiment. In the description of FIG. 4, the contents corresponding to, the same as or similar to the above-described contents may be omitted.

In an embodiment, after the second smoking operation 330 is detected, the processor (e.g., the processor 110 of FIG. 1) may perform a preheating operation on a second aerosol generating article based on a second temperature profile for a preset preheating time (e.g., the preset preheating time 305 of FIG. 3B).

In an embodiment, the processor 110 may supply power to the heater 120 so that the temperature of the heater 120 rises to the first preheating temperature 320 in the second temperature rising section 340. In this case, the second temperature rising section 340 may include a certain delay time, and the certain delay time may be set based on the temperature of the heater 120 at the time when the second smoking operation 330 is detected. For example, when the temperature of the heater 120 is a first temperature 400 at the time when the second smoking operation 330 is detected, the second temperature rising section 340 may include a delay time as much as the first delay time 420. In another example, when the temperature of the heater 120 is a second temperature 410 that is greater than the first temperature 400 at the time when the second smoking operation 330 is detected, the second temperature rising section 340 may include a delay time as much as a second delay time 422 that is longer than the first delay time 420. At this time, the first temperature 400 and the second temperature 410 may be greater than or equal to the preset temperature 315 of FIGS. 3A and 3B.

In the present disclosure, as the second temperature rising section 340 includes different delay times according to the temperature of the heater 120 at the time when the second smoking operation is detected, the parameter Kp for P control in the PID control method may be flexibly adjusted. For example, when the temperature of the heater 120, at the time when the second smoking operation is detected, is the first temperature 400 that is comparatively low, the processor 110 needs to raise the temperature of the heater 120 as much as a temperature difference between the first temperature 400 and the first preheating temperature 320. Thus, the processor 110 may adjust a parameter Kp1 for P control to be comparatively low so as to raise the temperature of the heater 120 as much as the temperature difference between the first temperature 400 and the first preheating temperature 320. In another example, when the temperature of the heater 120, at the time when the second smoking operation is detected, is the second temperature 410 that is comparatively high, the processor 110 needs to raise the temperature of the heater 120 as much as a temperature difference between the second temperature 410 and the first preheating temperature 320. Thus, the processor 110 may adjust a parameter Kp2 for P control to be comparatively low so as to raise the temperature of the heater 120 as much as the temperature difference between the second temperature 410 and the first preheating temperature 320. That is, as the parameters Kp1 and Kp2 for P control are differently adjusted according to the temperature of the heater 120 at the time when the second smoking operation is detected, so that a slope to which the temperature of the heater 120 rises in the second temperature rising section 340, may be adjusted to be substantially the same.

FIG. 5 is a flowchart illustrating that an aerosol generating device according to an embodiment controls power supply to a heater based on a temperature rising speed. FIG. 5 is a detailed flowchart for controlling power supply to a heater in the second temperature rising section 340 of FIG. 3B.

Referring to FIG. 5, a processor (e.g., the processor 110 of FIG. 1) of the aerosol generating device (e.g., the aerosol generating device 100 of FIG. 1) may detect whether the temperature of the heater (e.g., the heater 120 of FIG. 1) reaches a first preheating temperature (e.g., the first preheating temperature 320 of FIG. 3B) within a preset time in operation 501. In the present disclosure, a 'preset time' may mean time required for an aerosol generating article, in which the water amount of a tobacco rod includes a reference water amount (e.g., the water amount of about 15 wt% with respect to the weight of the tobacco rod), to reach the first preheating temperature 320.

According to an embodiment when the temperature of the heater 120 reaches the first preheating temperature 320 within the preset time, the processor 110 may supply power to the heater 120 so as to be maintained at the first preheating temperature 320 in operation 503. For example, when the temperature of the heater 120 reaches the first preheating temperature 320 within the preset time, the processor 110 may determine the aerosol generating article inserted into the aerosol generating device 100 to be an aerosol generating article in a general state. The 'general state' may mean a state in which a tobacco rod (e.g., an aerosol generating material and/or a portion including a tobacco material) of the aerosol generating article includes the water amount less than a reference water amount (e.g., about 15 wt%). In an embodiment, when the temperature of the heater 120 reaches the first preheating temperature 320 within the preset time, the processor 110 may supply power to the heater 120 so as to enter a second temperature maintenance section (e.g., the second temperature maintenance section 342 of FIG. 3B).

According to an embodiment, when the temperature of the heater 120 does not reach the first preheating temperature 320 within the preset time, the processor 110 may cut off power supply to the heater 120 in operation 505. For example, when the temperature of the heater 120 does not reach the first preheating temperature 320 within the preset time, the processor 110 may determine the aerosol generating article inserted into the aerosol generating device 100 to be an aerosol generating article in an excess moisture state. The 'excess moisture state' may mean a state in which the tobacco rod of the aerosol generating article includes a water amount that is greater than or equal to the reference water amount. In an embodiment, when the temperature of the heater 120 does not reach the first preheating temperature 320 within the preset time, the processor 110 may cut off power supply to the heater 120 so as not to enter the second temperature maintenance section 342.

FIG. 6 is a graph for explaining a second temperature profile corresponding to a temperature rising speed according to an embodiment. In the description of FIG. 6, the contents corresponding to, the same as or similar to the above-described contents may be omitted.

Referring to FIG. 6, a processor (e.g., the processor 110 of FIG. 1) may detect the second smoking operation 330. For example, when the processor 110 receives an additional user input (e.g., a physical button input, a voice input, a touch input or the like) or detects the insertion of the aerosol generating article, the processor 110 may detect a second smoking operation 330 based on preset conditions (e.g., temperature conditions, time conditions).

In an embodiment, the processor 110 may detect whether the temperature of the heater (e.g., the heater 120 of FIG. 1) reaches the first preheating temperature 320 within the preset time. In this case, the 'preset time' may mean a time corresponding to the second temperature rising section 340. For example, the processor 110 may detect whether the temperature of the heater 120 reaches the first preheating temperature 320 within the preset time based on the temperature sensor (e.g., the temperature sensor 130 of FIG. 1) and the timer (not shown). The processor 110 may detect whether the time corresponding to the second temperature rising section 340 elapsed by using the timer (not shown), and when the time corresponding to the second temperature rising section 340 elapsed, the processor 110 may measure the temperature of the heater 120 using the temperature sensor 130.

In an embodiment, when the temperature of the heater 120 reaches the first preheating temperature 320 within a time corresponding to the second temperature rising section 340, the processor 110 may determine that the aerosol generating article inserted into the aerosol generating device (e.g., the aerosol generating device 100 of FIG. 1) is an aerosol generating article in a general state, and may control power supply to the heater 120 based on the temperature profile 650. For example, the processor 110 may supply power to the heater 120 so as to enter the second temperature maintenance section 342 based on the temperature profile 650.

In another embodiment, when the temperature of the heater 120 does not reach the first preheating temperature 320 within the time corresponding to the second temperature rising section 340, the processor 110 may determine that the aerosol generating article inserted into the aerosol generating device 100 is an aerosol generating article in an excess moisture state, and may control power supply to the heater 120 based on the temperature profile 655. For example, the processor 110 may cut off power supply to the heater 120 so as not to enter the second temperature maintenance section 342 based on the temperature profile 650.

FIG. 7 is a graph for describing a method, whereby the aerosol generating device according to an embodiment detects a second smoking operation.

Referring to FIG. 7, a processor (e.g., the processor 110 of FIG. 1) may detect termination (700) of the first smoking operation. In the present disclosure, the 'termination of the first smoking operation' may mean that the first aerosol generating article is removed from the aerosol generating device (e.g., the aerosol generating device 100 of FIG. 1) after a series of puffs are performed on a first aerosol generating article as much as a preset puff number.

In an embodiment, the processor 110 may detect termination (700) of the first smoking operation by using the temperature sensor (e.g., the temperature sensor 130 of FIG. 1). For example, as the heated first aerosol generating article is removed from the aerosol generating device 100, the temperature of the heater (e.g., the heater 120 of FIG. 1) may be substantially rapidly increased. The processor 110 may detect termination (700) of the first smoking operation based on a slope of a temperature change of the heater 120. However, embodiments are not limited thereto, and the processor 110 may detect termination (700) of the first smoking operation by using various sensors. For example, the processor 110 may detect termination (700) of the first smoking operation by using at least one of a film sensor, a pressure sensor, an optical sensor, a resistive sensor, a capacitive sensor, an inductive sensor, and an infrared ray sensor.

In an embodiment, the processor 110 may detect initiation (710) of the second smoking operation after the termination (700) of the first smoking operation is detected. In the present disclosure, the 'initiation of the second smoking operation' may mean that a second aerosol generating article is continuously inserted and a preheating operation is performed after the first aerosol generating article is removed.

In an embodiment, the processor 110 may also detect the second smoking operation based on time measured by a timer (not shown). For example, when the initiation of the additional smoking operation is detected after the termination (700) of the first smoking operation is detected, the processor 110 may detect an elapsed time measured by the timer (not shown). The elapsed time may mean time from time when the termination (700) of the first smoking operation is detected, to time when the initiation of an additional smoking operation is detected. When the detected elapsed time is within a preset time 720, the processor 110 may detect the additional smoking operation to be a second smoking operation. In this case, the preset temperature 720 may be about 30 seconds. However, embodiments are not limited thereto.

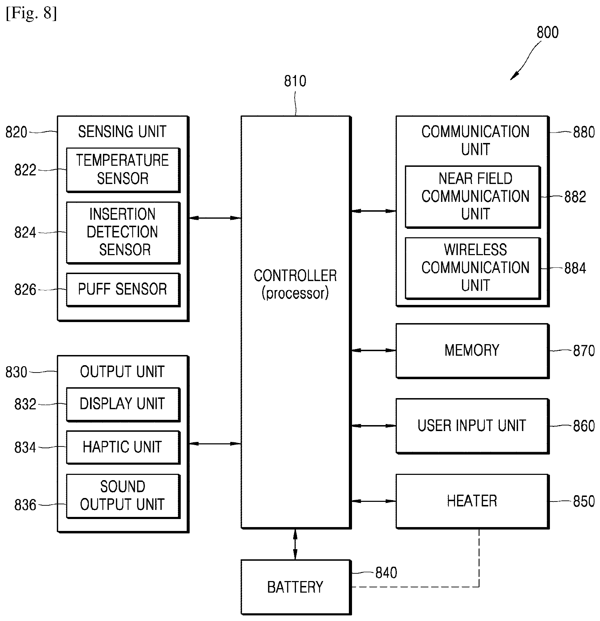

FIG. 8 is a block diagram of an aerosol generating device 800 according to another embodiment.

The aerosol generating device 800 may include a controller 810, a sensing unit 820, an output unit 830, a battery 840, a heater 850, a user input unit 860, a memory 870, and a communication unit 880. However, the internal structure of the aerosol generating device 800 is not limited to those illustrated in FIG. 8. That is, according to the design of the aerosol generating device 800, it will be understood by one of ordinary skill in the art that some of the components shown in FIG. 8 may be omitted or new components may be added.

The sensing unit 820 may sense a state of the aerosol generating device 800 and a state around the aerosol generating device 800, and transmit sensed information to the controller 810. Based on the sensed information, the controller 810 may control the aerosol generating device 800 to perform various functions, such as controlling an operation of the heater 850, limiting smoking, determining whether an aerosol generating article (e.g., a cigarette, a cartridge, or the like) is inserted, displaying a notification, or the like.

The sensing unit 820 may include at least one of a temperature sensor 822, an insertion detection sensor, and a puff sensor 826, but is not limited thereto.

The temperature sensor 822 may sense a temperature at which the heater 850 (or an aerosol generating material) is heated. The aerosol generating device 800 may include a separate temperature sensor for sensing the temperature of the heater 850, or the heater 850 may serve as a temperature sensor. Alternatively, the temperature sensor 822 may also be arranged around the battery 840 to monitor the temperature of the battery 840.

The insertion detection sensor 824 may sense insertion and/or removal of an aerosol generating article. For example, the insertion detection sensor 824 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 826 may sense a user's puff on the basis of various physical changes in an airflow passage or an airflow channel. For example, the puff sensor 826 may sense a user's puff on the basis of any one of a temperature change, a flow change, a voltage change, and a pressure change.

The sensing unit 820 may include, in addition to the temperature sensor 822, the insertion detection sensor 824, and the puff sensor 826 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 830 may output information on a state of the aerosol generating device 800 and provide the information to a user. The output unit 830 may include at least one of a display unit 832, a haptic unit 834, and a sound output unit 836, but is not limited thereto. When the display unit 832 and a touch pad form a layered structure to form a touch screen, the display unit 832 may also be used as an input device in addition to an output device.

The display unit 832 may visually provide information about the aerosol generating device 800 to the user. For example, information about the aerosol generating device 800 may mean various pieces of information, such as a charging/discharging state of the battery 840 of the aerosol generating device 800, a preheating state of the heater 850, an insertion/removal state of an aerosol generating article, or a state in which the use of the aerosol generating device 800 is restricted (e.g., sensing of an abnormal object), or the like, and the display unit 832 may output the information to the outside. The display unit 832 may be, for example, a liquid crystal display panel (LCD), an organic light-emitting diode (OLED) display panel, or the like. In addition, the display unit 832 may be in the form of a light-emitting diode (LED) light-emitting device.

The haptic unit 834 may tactilely provide information about the aerosol generating device 800 to the user by converting an electrical signal into a mechanical stimulus or an electrical stimulus. For example, the haptic unit 834 may include a motor, a piezoelectric element, or an electrical stimulation device.

The sound output unit 836 may audibly provide information about the aerosol generating device 800 to the user. For example, the sound output unit 836 may convert an electrical signal into a sound signal and output the same to the outside.

The battery 840 may supply power used to operate the aerosol generating device 800. The battery 840 may supply power such that the heater 850 may be heated. In addition, the battery 840 may supply power required for operations of other components (e.g., the sensing unit 820, the output unit 830, the user input unit 860, the memory 870, and the communication unit 880) in the aerosol generating device 800. The battery 840 may be a rechargeable battery or a disposable battery. For example, the battery 840 may be a lithium polymer (LiPoly) battery, but is not limited thereto.

The heater 850 may receive power from the battery 840 to heat an aerosol generating material. Although not illustrated in FIG. 8, the aerosol generating device 800 may further include a power conversion circuit (e.g., a direct current (DC)/DC converter) that converts power of the battery 840 and supplies the same to the heater 850. In addition, when the aerosol generating device 800 generates aerosols in an induction heating method, the aerosol generating device 800 may further include a DC/alternating current (AC) that converts DC power of the battery 840 into AC power.

In an embodiment, the controller 810 may supply power to the heater 850 based on the preheating temperature profile for the aerosol generating article. For example, when a first smoking operation corresponding to initial smoking is detected, the controller 810 may supply power to the heater 850 based on the first temperature profile. In another example, when the second smoking operation corresponding to continuous smoking is detected, the controller 810 may supply power to the heater 850 based on a second temperature profile in which a time corresponding to the temperature drop section of the first temperature profile is corrected.

The controller 810, the sensing unit 820, the output unit 830, the user input unit 860, the memory 870, and the communication unit 880 may each receive power from the battery 840 to perform a function. Although not illustrated in FIG. 8, the aerosol generating device 800 may further include a power conversion circuit that converts power of the battery 840 to supply the power to respective components, for example, a low dropout (LDO) circuit, or a voltage regulator circuit.

In an embodiment, the heater 850 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 850 may be implemented by a metal wire, a metal plate on which an electrically conductive track is arranged, a ceramic heating element, or the like, but is not limited thereto.

In another embodiment, the heater 850 may be a heater of an induction heating type. For example, the heater 850 may include a susceptor that heats an aerosol generating material by generating heat through a magnetic field applied by a coil.

The user input unit 860 may receive information input from the user or may output information to the user. For example, the user input unit 860 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 8, the aerosol generating device 800 may further include a connection interface, such as a universal serial bus (USB) interface, and may connect to other external devices through the connection interface, such as the USB interface, to transmit and receive information, or to charge the battery 840.

The memory 870 is a hardware component that stores various types of data processed in the aerosol generating device 800, and may store data processed and data to be processed by the controller 810. The memory 870 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 870 may store an operation time of the aerosol generating device 800, the maximum number of puffs, the current number of puffs, at least one temperature profile, data on a user's smoking pattern, etc.

The communication unit 880 may include at least one component for communication with another electronic device. For example, the communication unit 880 may include a short-range wireless communication unit 882 and a wireless communication unit 884.

The short-range wireless communication unit 882 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 884 may include a cellular network communication unit, an Internet communication unit, a computer network (e.g., local area network (LAN) or wide area network (WAN)) communication unit, or the like, but is not limited thereto. The wireless communication unit 884 may also identify and authenticate the aerosol generating device 800 within a communication network by using subscriber information (e.g., International Mobile Subscriber Identifier (IMSI)).

The controller 810 may control general operations of the aerosol generating device 800. In an embodiment, the controller 810 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 810 may control the temperature of the heater 850 by controlling supply of power of the battery 840 to the heater 850. For example, the controller 810 may control power supply by controlling switching of a switching element between the battery 840 and the heater 850. In another example, a direct heating circuit may also control power supply to the heater 850 according to a control command of the controller 810.

The controller 810 may analyze a result sensed by the sensing unit 820 and control subsequent processes to be performed. For example, the controller 810 may control power supplied to the heater 850 to start or end an operation of the heater 850 on the basis of a result sensed by the sensing unit 820. As another example, the controller 810 may control, based on a result sensed by the sensing unit 820, an amount of power supplied to the heater 850 and the time the power is supplied, such that the heater 850 may be heated to a certain temperature or maintained at an appropriate temperature.

The controller 810 may control the output unit 830 on the basis of a result sensed by the sensing unit 820. For example, when the number of puffs counted through the puff sensor 826 reaches a preset number, the controller 810 may notify the user that the aerosol generating device 800 will soon be terminated through at least one of the display unit 832, the haptic unit 834, and the sound output unit 836.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

## Claims

1. An aerosol generating device (100, 800) comprising:
a heater (120, 850) configured to heat at least a portion of an aerosol generating article;
a temperature sensor (133, 822) configured to measure a temperature of the heater (120, 850); and
a processor (110) configured to control power supply to the heater (120, 850) according to a first temperature profile for a first smoking operation (300),
wherein the processor (110) is further configured to detect a second smoking operation (330) after the first smoking operation (300), based on the temperature of the heater (120, 850) measured by the temperature sensor (133, 822), and to control power supply to the heater (120, 850) according to a second temperature profile in which a time corresponding to a temperature drop section (314) of the first temperature profile is corrected, when the second smoking operation (330) is detected.

2. The aerosol generating device of claim 1, wherein a time corresponding to a temperature drop section (344) of the second temperature profile is longer than the time corresponding to the temperature drop section (314) of the first temperature profile.

3. The aerosol generating device of claim 1, wherein the first temperature profile and the second temperature profile are preheating temperature profiles for a preset preheating time.

4. The aerosol generating device of claim 1, wherein the processor (110) is further configured to detect whether the temperature of the heater (120, 850) measured by the temperature sensor (133, 822) is greater than or equal to a preset temperature, and to detect the second smoking operation (330) when the temperature of the heater (120, 850) is greater than or equal to the preset temperature.

5. The aerosol generating device of claim 4, wherein the preset temperature is 80°C.

6. The aerosol generating device of claim 1, wherein the second temperature profile comprises a temperature rising section (340) in which the temperature of the heater (120, 850) rises to a first preheating temperature for a first time after a certain delay time elapsed, a temperature maintenance section (342) in which the temperature of the heater (120, 850) is maintained at the first preheating temperature (320) for a second time, and a temperature drop section (344) in which the temperature of the heater (120 ,850) drops to a second preheating temperature (325) for a third time.

7. The aerosol generating device of claim 6, wherein the processor (110) is further configured to control power supply to the heater (120, 850) using a proportional-integral-differential (PID) control method, and the certain delay time is set to adjust a parameter Kp for P control in the PID control method.

8. The aerosol generating device of claim 6, wherein the third time is a difference between a time obtained by adding the certain delay time, the first time, and the second time and a preset preheating time.

9. The aerosol generating device of claim 6, wherein the delay time is set based on the temperature of the heater (120, 850) at a time when the second smoking operation (330) is detected.

10. The aerosol generating device of claim 6, wherein, when the temperature of the heater (120, 850) at a time when the second smoking operation (330) is detected is a first temperature, the delay time is set to a first delay time, and when the temperature of the heater (120, 850) at the time when the second smoking operation (330) is detected is a second temperature that is greater than the first temperature, the delay time is set to a second delay time that is longer than the first delay time.

11. The aerosol generating device of claim 1, wherein the processor (110) is further configured to control power supply to the heater (120, 850) based on whether the temperature of the heater (120, 850) reaches a first preheating temperature (320) within a preset time.

12. The aerosol generating device of claim 1, wherein the processor (110) is further configured to detect whether the temperature of the heater (120, 850) reaches a first preheating temperature (320) within a preset time, and to supply power to the heater (120, 850) so that the temperature of the heater (120, 850) is maintained at the first preheating temperature (320) when the temperature of the heater (120, 850) reaches the first preheating temperature (320) within the preset time, and to cut off power supply to the heater (120, 850) when the temperature of the heater (120, 850) does not reach the first preheating temperature (320) within the preset time.

13. An operating method of an aerosol generating device (100, 800), the operating method comprising:
controlling power supply to a heater (120, 850) according to a first temperature profile for a first smoking operation (300);
detecting a second smoking operation (330) after the first smoking operation (300) based on the temperature of the heater (120, 850) measured by a temperature sensor (133, 822); and
controlling power supply to the heater (120, 850) according to a second temperature profile in which a time corresponding to a temperature drop section (314) of the first temperature profile is corrected, when the second smoking operation (330) is detected.

14. The operating method of claim 13, wherein the detecting of the second smoking operation (330) comprises:
detecting whether the temperature of the heater (120, 850) measured by the temperature sensor (133, 822) is greater than or equal to a preset temperature; and
detecting the second smoking operation (330) when the temperature of the heater (120, 850) is greater than or equal to the preset temperature.

15. The operating method of claim 13, further comprising:
detecting whether the temperature of the heater (120, 850) reaches a first preheating temperature (320) within a preset time; and
supplying power to the heater (120, 850) so that the temperature of the heater (120, 850) is maintained at the first preheating temperature (320) when the temperature of the heater (120, 850) reaches the first preheating temperature (320) within the preset time, and cutting off power supply to the heater (120, 850) when the temperature of the heater (120, 850) does not reach the first preheating temperature (320) within the preset time.

## Patentansprüche

1. Aerosolerzeugungsvorrichtung (100, 800), die Folgendes umfasst:
eine Heizeinrichtung (120, 850), die konfiguriert ist, zumindest einen Anteil eines Aerosolerzeugungserzeugnisses zu erhitzen;
einen Temperatursensor (133, 822), der konfiguriert ist, eine Temperatur der Heizeinrichtung (120, 850) zu messen; und
einen Prozessor (110), der konfiguriert ist, die Energiezufuhr an die Heizeinrichtung (120, 850) gemäß einem ersten Temperaturprofil für einen ersten Rauchvorgang (300) zu steuern,
wobei der Prozessor (110) ferner konfiguriert ist, auf der Grundlage der Temperatur der Heizeinrichtung (120, 850), die durch den Temperatursensor (133, 822) gemessen wird, einen zweiten Rauchvorgang (330) nach dem ersten Rauchvorgang (300) zu detektieren und die Energiezufuhr an die Heizeinrichtung (120, 850) gemäß einem zweiten Temperaturprofil zu steuern, bei dem eine Zeit, die einem Temperaturabfallabschnitt (314) des ersten Temperaturprofils entspricht, korrigiert wird, wenn der zweite Rauchvorgang (330) detektiert wird.

2. Aerosolerzeugungsvorrichtung nach Anspruch 1, wobei eine Zeit, die einem Temperaturabfallabschnitt (344) des zweiten Temperaturprofils entspricht, länger ist als die Zeit, die dem Temperaturabfallabschnitt (314) des ersten Temperaturprofils entspricht.

3. Aerosolerzeugungsvorrichtung nach Anspruch 1, wobei das erste Temperaturprofil und das zweite Temperaturprofil Vorheiztemperaturprofile für eine vorgegebene Vorheizzeit sind.

4. Aerosolerzeugungsvorrichtung nach Anspruch 1, wobei der Prozessor (110) ferner konfiguriert ist zu detektieren, ob die Temperatur der Heizeinrichtung (120, 850), die durch den Temperatursensor (133, 822) gemessen wird, größer oder gleich einer vorgegebenen Temperatur ist, und den zweiten Rauchvorgang (330) zu detektieren, wenn die Temperatur der Heizeinrichtung (120, 850) größer oder gleich der vorgegebenen Temperatur ist.

5. Aerosolerzeugungsvorrichtung nach Anspruch 4, wobei die vorgegebene Temperatur 80 °C ist.

6. Aerosolerzeugungsvorrichtung nach Anspruch 1, wobei das zweite Temperaturprofil einen Temperaturanstiegsabschnitt (340), in dem die Temperatur der Heizeinrichtung (120, 850) für eine erste Zeit, nachdem eine bestimmte Verzögerungszeit verstrichen ist, auf eine erste Vorheiztemperatur ansteigt, einen Temperaturhalteabschnitt (342), in dem die Temperatur der Heizeinrichtung (120, 850) für eine zweite Zeit bei der ersten Vorheiztemperatur (320) gehalten wird, und einen Temperaturabfallabschnitt (344), in dem die Temperatur der Heizeinrichtung (120, 850) für eine dritte Zeit auf eine zweite Vorheiztemperatur (325) abfällt, umfasst.

7. Aerosolerzeugungsvorrichtung nach Anspruch 6, wobei der Prozessor (110) ferner konfiguriert ist, die Energiezufuhr an die Heizeinrichtung (120, 850) unter Verwendung eines Proportional-Integral-Differenzial-Steuerverfahrens (PID-Steuerverfahrens) zu steuern, und die bestimmte Verzögerungszeit eingestellt wird, um einen Parameter Kp für die P-Steuerung im PID-Steuerverfahren anzupassen.

8. Aerosolerzeugungsvorrichtung nach Anspruch 6, wobei die dritte Zeit eine Differenz zwischen einer Zeit, die durch Addieren der bestimmten Verzögerungszeit, der ersten Zeit und der zweiten Zeit erhalten wird, und einer vorgegebenen Vorheizzeit ist.

9. Aerosolerzeugungsvorrichtung nach Anspruch 6, wobei die Verzögerungszeit auf der Grundlage der Temperatur der Heizeinrichtung (120, 850) zu einer Zeit, zu der der zweite Rauchvorgang (330) detektiert wird, eingestellt wird.

10. Aerosolerzeugungsvorrichtung nach Anspruch 6, wobei dann, wenn die Temperatur der Heizeinrichtung (120, 850) zu einer Zeit, zu der der zweite Rauchvorgang (330) detektiert wird, eine erste Temperatur ist, die Verzögerungszeit auf eine erste Verzögerungszeit eingestellt wird, und dann, wenn die Temperatur der Heizeinrichtung (120, 850) zu der Zeit, zu der der zweite Rauchvorgang (330) detektiert wird, eine zweite Temperatur ist, die größer als die erste Temperatur ist, die Verzögerungszeit auf eine zweite Verzögerungszeit eingestellt wird, die länger als die erste Verzögerungszeit ist.

11. Aerosolerzeugungsvorrichtung nach Anspruch 1, wobei der Prozessor (110) ferner konfiguriert ist, die Energiezufuhr zur Heizeinrichtung (120, 850) auf der Grundlage davon, ob die Temperatur der Heizeinrichtung (120, 850) eine erste Vorheiztemperatur (320) innerhalb einer vorgegebenen Zeit erreicht, zu steuern.

12. Aerosolerzeugungsvorrichtung nach Anspruch 1, wobei der Prozessor (110) ferner konfiguriert ist zu detektieren, ob die Temperatur der Heizeinrichtung (120, 850) eine erste Vorheiztemperatur (320) innerhalb einer vorgegebenen Zeit erreicht, und der Heizeinrichtung (120, 850) derart Energie zuzuführen, dass die Temperatur der Heizeinrichtung (120, 850) bei einer ersten Vorheiztemperatur (320) gehalten wird, wenn die Temperatur der Heizeinrichtung (120, 850) die erste Vorheiztemperatur (320) innerhalb der vorgegebenen Zeit erreicht, und die Energiezufuhr an die Heizeinrichtung (120, 850) auszuschalten, wenn die Temperatur der Heizeinrichtung (120, 850) die erste Vorheiztemperatur (320) nicht innerhalb der vorgegebenen Zeit erreicht.

13. Verfahren zum Betreiben einer Aerosolerzeugungsvorrichtung (100, 800), wobei das Betriebsverfahren Folgendes umfasst:
Steuern der Energiezufuhr an eine Heizeinrichtung (120, 850) gemäß einem ersten Temperaturprofil für einen ersten Rauchvorgang (300);
Detektieren eines zweiten Rauchvorgangs (330) nach dem ersten Rauchvorgang (300) auf der Grundlage der Temperatur der Heizeinrichtung (120, 850), die durch einen Temperatursensor (133, 822) gemessen wird; und
Steuern der Energiezufuhr an die Heizeinrichtung (120, 850) gemäß einem zweiten Temperaturprofil, in dem eine Zeit, die einem Temperaturabfallabschnitt (314) des ersten Temperaturprofils entspricht, korrigiert wird, wenn der zweite Rauchvorgang (330) detektiert wird.

14. Betriebsverfahren nach Anspruch 13, wobei das Detektieren des zweiten Rauchvorgangs (330) Folgendes umfasst:
Detektieren, ob die Temperatur der Heizeinrichtung (120, 850), die durch den Temperatursensor (133, 822) gemessen wird, größer oder gleich einer vorgegebenen Temperatur ist; und
Detektieren des zweiten Rauchvorgangs (330), wenn die Temperatur der Heizeinrichtung (120, 850) größer oder gleich der vorgegebenen Temperatur ist.

15. Betriebsverfahren nach Anspruch 13, das ferner Folgendes umfasst:
Detektieren, ob die Temperatur der Heizeinrichtung (120, 850) eine erste Vorheiztemperatur (320) innerhalb einer vorgegebenen Zeit erreicht; und
Zuführen von Energie an die Heizeinrichtung (120, 850), derart, dass die Temperatur der Heizeinrichtung (120, 850) bei der ersten Vorheiztemperatur (320) gehalten wird, wenn die Temperatur der Heizeinrichtung (120, 850) die erste Vorheiztemperatur (320) innerhalb der vorgegebenen Zeit erreicht, und Ausschalten der Energiezufuhr an die Heizeinrichtung (120, 850), wenn die Temperatur der Heizeinrichtung (120, 850) die erste Vorheiztemperatur (320) nicht innerhalb der vorgegebenen Zeit erreicht.

## Revendications

1. Dispositif de production d'aérosol (100, 800) comportant :
un élément chauffant (120, 850) configuré pour chauffer au moins une partie d'un article de production d'aérosol ;
un capteur de température (133, 822) configuré pour mesurer une température de l'élément chauffant (120, 850) ; et
un processeur (110) configuré pour commander une fourniture d'énergie à l'élément chauffant (120, 850) en fonction d'un premier profil de température pour une première opération de consommation de tabac (300),
dans lequel le processeur (110) est en outre configuré pour détecter une seconde opération de consommation de tabac (330) après la première opération de consommation de tabac (300), sur la base de la température de l'élément chauffant (120, 850) mesurée par le capteur de température (133, 822), et pour commander la fourniture d'énergie à l'élément chauffant (120, 850) en fonction d'un second profil de température dans lequel un temps correspondant à une section de chute de température (314) du premier profil de température est corrigé, lorsque la seconde opération de consommation de tabac (330) est détectée.

2. Dispositif de production d'aérosol selon la revendication 1, dans lequel un temps correspondant à une section de chute de température (344) du second profil de température est plus long que le temps correspondant à la section de chute de température (314) du premier profil de température.

3. Dispositif de production d'aérosol selon la revendication 1, dans lequel le premier profil de température et le second profil de température sont des profils de température de préchauffage pendant un temps de préchauffage prédéfini.

4. Dispositif de production d'aérosol selon la revendication 1, dans lequel le processeur (110) est en outre configuré pour détecter si la température de l'élément chauffant (120, 850) mesurée par le capteur de température (133, 822) est supérieure ou égale à une température préréglée, et pour détecter la seconde opération de consommation de tabac (330) lorsque la température de l'élément chauffant (120, 850) est supérieure ou égale à la température préréglée.

5. Dispositif de production d'aérosol selon la revendication 4, dans lequel la température préréglée est de 80 °C.

6. Dispositif de production d'aérosol selon la revendication 1, dans lequel le second profil de température comporte une section d'élévation de température (340) dans laquelle la température de l'élément chauffant (120, 850) augmente jusqu'à une première température de préchauffage pendant un premier temps après l'écoulement d'un certain temps de retard, une section de maintien en température (342) dans laquelle la température de l'élément chauffant (120, 850) est maintenue à la première température de préchauffage (320) pendant un deuxième temps, et une section de chute de température (344) dans laquelle la température de l'élément chauffant (120, 850) chute jusqu'à une seconde température de préchauffage (325) pendant un troisième temps.

7. Dispositif de production d'aérosol selon la revendication 6, dans lequel le processeur (110) est en outre configuré pour commander la fourniture d'énergie à l'élément chauffant (120, 850) en utilisant un procédé de commande à actions proportionnelle intégrale et dérivée (PID), et le certain temps de retard est fixé de manière à ajuster un paramètre Kp pour une commande P dans le procédé de commande PID.

8. Dispositif de production d'aérosol selon la revendication 6, dans lequel le troisième temps est une différence entre un temps obtenu en additionnant le certain temps de retard, le premier temps et le deuxième temps et un temps de préchauffage prédéfini.

9. Dispositif de production d'aérosol selon la revendication 6, dans lequel le temps de retard est fixé sur la base de la température de l'élément chauffant (120, 850) à un instant où la seconde opération de consommation de tabac (330) est détectée.

10. Dispositif de production d'aérosol selon la revendication 6, dans lequel, lorsque la température de l'élément chauffant (120, 850) à un instant où la seconde opération de consommation de tabac (330) est détectée est une première température, le temps de retard est fixé à un premier temps de retard, et lorsque la température de l'élément chauffant (120, 850) à l'instant où la seconde opération de consommation de tabac (330) est détectée est une seconde température qui est supérieure à la première température, le temps de retard est fixé à un second temps de retard qui est plus long que le premier temps de retard.

11. Dispositif de production d'aérosol selon la revendication 1, dans lequel le processeur (110) est en outre configuré pour commander la fourniture d'énergie à l'élément chauffant (120, 850) sur la base de si la température de l'élément chauffant (120, 850) atteint une première température de préchauffage (320) dans les limites d'un temps prédéfini.

12. Dispositif de production d'aérosol selon la revendication 1, dans lequel le processeur (110) est en outre configuré pour détecter si la température de l'élément chauffant (120, 850) atteint une première température de préchauffage (320) dans les limites d'un temps prédéfini, et pour fournir de l'énergie à l'élément chauffant (120, 850) de sorte que la température de l'élément chauffant (120, 850) est maintenue à la première température de préchauffage (320) lorsque la température de l'élément chauffant (120, 850) atteint la première température de préchauffage (320) dans les limites du temps prédéfini, et de couper la fourniture d'énergie de l'élément chauffant (120, 850) lorsque la température de l'élément chauffant (120, 850) n'atteint pas la première température de préchauffage (320) dans les limites du temps prédéfini.

13. Procédé de fonctionnement d'un dispositif de production d'aérosol (100, 800), le procédé de fonctionnement comportant les étapes consistant à :
commander la fourniture d'énergie à un élément chauffant (120, 850) en fonction d'un premier profil de température pour une première opération de consommation de tabac (300) ;
détecter une seconde opération de consommation de tabac (330) après la première opération de consommation de tabac (300) sur la base de la température de l'élément chauffant (120, 850) mesurée par un capteur de température (133, 822) ; et
commander la fourniture d'énergie à l'élément chauffant (120, 850) en fonction d'un second profil de température dans lequel un temps correspondant à une section de chute de température (314) du premier profil de température est corrigé, lorsque la seconde opération de consommation de tabac (330) est détectée.

14. Procédé de fonctionnement selon la revendication 13, dans lequel la détection de la seconde opération de consommation de tabac (330) comporte de :
détecter si la température de l'élément chauffant (120, 850) mesurée par le capteur de température (133, 822) est supérieure ou égale à une température préréglée ; et
détecter la seconde opération de consommation de tabac (330) lorsque la température de l'élément chauffant (120, 850) est supérieure ou égale à la température préréglée.

15. Procédé de fonctionnement selon la revendication 13, comportant en outre de :
détecter si la température de l'élément chauffant (120, 850) atteint une première température de préchauffage (320) dans les limites d'un temps prédéfini ; et
fournir de l'énergie à l'élément chauffant (120, 850) de sorte que la température de l'élément chauffant (120, 850) est maintenue à la première température de préchauffage (320) lorsque la température de l'élément chauffant (120, 850) atteint la première température de préchauffage (320) dans les limites du temps prédéfini, et couper la fourniture d'énergie à l'élément chauffant (120, 850) lorsque la température de l'élément chauffant (120, 850) n'atteint pas la première température de préchauffage (320) dans les limites du temps prédéfini.
